# EUROPÄISCHE PATENTANMELDUNG

(11) **EP 3 290 725 A1**
(43) Veröffentlichungstag der Anmeldung: **07.03.2018**
(21) Anmeldenummer: 16187251.0
(22) Anmeldetag: 05.09.2016
(51) Int. Cl.: F16C 17/10, F16C 33/10

(54) **GLEITLAGERSYSTEM**

(71) Anmelder: Flender GmbH, 46395 Bocholt (DE)
(72) Erfinder: Meyer, Thomas, 52223 Stolberg (DE)
(74) Vertreter: Maier, Daniel Oliver

(57) **Zusammenfassung**

Die Erfindung betrifft ein Gleitlagersystem (1) mit einem Radialgleitlager (8) und mit einem Ringkanal (9,10) zur Versorgung des Schmierspaltes (13) des Radialgleitlagers mit einem Schmierstoff (16). Der divergente Schmierspalt (20) des Radialgleitlagers (8) ist über den Ringkanal (9,10) mit dem Schmierstoff (16) versorgbar. Bei einem System mit Radialgleitlager (8) und einem Axialgleitlager (11,12) wird der Schmierspalt (13) des Radialgleitlagers mit dem Schmierspalt (14,15) des Axialgleitlagers über den Ringkanal (9,10) verbunden.

## Beschreibung

Die Erfindung betrifft ein Gleitlagersystem mit einem ersten Gleitlager und einem zweiten Gleitlager.

Ein Gleitlager weist beispielsweise einen Lagerkörper auf, an dem eine Gleitfläche ausgebildet ist. Gleitlager dienen beispielsweise dem Führen bewegbarer Maschinenteile. So umfasst das Gleitlager beispielsweise die Gleitfläche, die an dem Lagerkörper des Gleitlagers derart ausgebildet ist, dass sie mit dem bewegbaren Maschinenteil während dessen Bewegung dauerhaft in unmittelbarem Kontakt steht. Je nach der Bewegung des Maschinenteils in dem Gleitlager lassen sich Lineargleitlager und Rotationsgleitlager unterscheiden, wobei letztere abhängig von der Richtung der Führungskraft als Radialgleitlager und Axialgleitlager ausgestaltet sein können.

Bei der Bewegung des Maschinenteils entlang der Gleitfläche tritt unvermeidlich Gleitreibung auf, die der Bewegung des Maschinenteils einen Widerstand entgegensetzt. Dessen Überwindung erfordert Energie, die in Wärme umgewandelt wird, wodurch sich das Gleitlager und das Maschinenteil erhitzen. Zudem wird durch die Gleitreibung Oberflächenmaterial von der Gleitfläche und dem Maschinenteil abgetragen. Durch diesen Materialabtrag verschleißen das Gleitlager und das Maschinenteil bei fortgesetztem Betrieb allmählich.

Erhitzung und Verschleiß lassen sich allerdings reduzieren, wenn reibungsarme Materialien für die Gleitfläche und/oder das Maschinenteil verwendet werden, und/oder in den Zwischenraum zwischen der Gleitfläche und dem Maschinenteil ein flüssiger Schmierstoff eingebracht wird, der einen Flüssigkeitsfilm zwischen der Gleitfläche und dem Maschinenteil erzeugt. Geschmierte Gleitlager lassen sich in hydrostatische und hydrodynamische Gleitlager unterteilen.

Hydrostatische Gleitlager benötigen bereits zum Anlaufen einen vollständigen Schmierfilm zwischen der Gleitfläche und dem Maschinenteil, der durch eine Hochdruck-Pumpe realisiert wird. Zwar sind hydrostatische Gleitlager frei von Anlaufreibung und äußerst verschleißarm. Jedoch erfordern sie aufwändige Konstruktionen, insbesondere der Schmierstoffzuführung, sowie spezielle drucktolerante Schmierstoffe wie beispielsweise Hochdrucköl. Hydrodynamische Gleitlager dagegen bauen den erforderlichen Schmierfilm zwischen der Gleitfläche und dem Maschinenteil erst durch die Bewegung des Maschinenteils selbst auf.

Wenn sich beispielsweise eine Welle exzentrisch in einem hydrodynamischen Radialgleitlager dreht, erzeugt sie durch den sich verengenden keilförmigen Querschnitt des Zwischenraums zwischen der Welle und der Gleitfläche eine Schleppströmung im Schmierstoff. Dadurch entsteht im Schmierstoff eine hydrodynamische Druckverteilung, die wiederum auf die Welle eine Kraft ausübt. Ist die Gegenkraft zu der von außen wirkenden Lagerkraft (Gewichtskraft der Welle) groß genug, trennt sich die Welle durch Aufschwimmen auf dem Schmiermittel von der Gleitfläche. Daher müssen hydrodynamische Gleitlager eine Mindestdrehzahl erreichen, um einen ausreichenden hydrodynamisch tragfähigen Schmierfilm zu bilden.

Bei einem hydrodynamischen Radialgleitlager lassen sich demnach insgesamt vier Betriebsbereiche unterscheiden. Im Stillstand bzw. während des Anfahrens mit niedriger Drehzahl der Welle berühren sich die Welle und die Gleitfläche des Gleitlagers. Mit zunehmender Drehzahl der Welle wird der Schmierfilm tragfähiger und das Gleitlager geht in einen Übergangsbereich über, in welchem eine Mischung aus Trockenreibung und Flüssigkeitsreibung (sogenannte Mischreibung) vorherrscht. Oberhalb einer bestimmten Drehzahl der Welle liegt der volltragende Bereich des Gleitlagers, in dem es nur noch Flüssigkeitsreibung und somit geringen Verschleiß gibt.

Die Versorgung eines Radialgleitlagers mit Schmierstoff stellt unterschiedliche Anforderungen. So ist z.B. der Schmierstoff, z.B. einer Schmiertasche, im Lager zuzuführen. Im Bereich des konvergenten Schmierspalts (vor der kleinsten Schmierfilmdicke) wird in Gleitrichtung gesehen das inkompressible Öl (Beispiel für einen Schmierstoff) seitlich verdrängt. Dies ist der sogenannte Seitenfluss. Im divergenten Schmierspalt ist in Umfangsrichtung wieder Öl zuzuführen, um einen Unterdruck zu vermeiden, der die Tragfähigkeit mindert. Da im divergenten Schmierspaltbereich, unmittelbar hinter der kleinsten Schmierfilmdicke, wieder Öl zuzuführen ist, entsteht ein zu geringer Ölfüllungsgrad im divergenten Bereich, d.h., dass der Schmierspalt nicht vollständig mit Öl gefüllt ist. Dies führt bei breiten Lagern zu Instabilitäten und bei einer Lastumkehr ggf. zum Kontakt der Gleitflächen ohne Dämpfungsverhalten eines vollständig mit Öl gefüllten Schmierspalts. Liegt eine sehr breite Radialgleitlagerung vor, insbesondere eine Planetenradlagerung eines Windgetriebes, ist dies kritisch, da viel Schmierstoff zur Auffüllung benötigt wird.

Radialgleitlager werden aufgrund ihrer Eigenschaften unter anderem in Übersetzungsgetrieben verbaut. Dabei übersetzen diese Getriebe die Drehzahl einer Antriebswelle in eine höhere Drehzahl einer Abtriebswelle. Derartige Übersetzungsgetriebe werden beispielsweise in Windkraftanlagen verwendet, um die relativ geringe Rotordrehzahl in eine deutlich höhere Generatordrehzahl zu übersetzen. Derartige Windkraftgetriebe sind üblicherweise mehrstufig aufgebaut, um das erforderliche Übersetzungsverhältnis zu erreichen. Gleitlager in Übersetzungsgetrieben von Windkraftanlagen weisen aufgrund der windabhängig sehr variablen Drehzahlen einen gewissen Anteil von Mischreibung auf. Ein daraus möglicherweise resultierender Verschleiß kann infolge von Wartung, Reinigung und/oder Instandsetzung der Gleitlager zu entsprechenden Stillstandzeiten der Windkraftanlagen führen. Gerade in den Randbereichen der Gleitfläche kann der Schmierfilm abreißen, wodurch es zu erhöhtem Verschleiß in den Randbereichen der Gleitfläche des Radialgleitlagers kommt. Zudem besteht die Gefahr, dass sich Materialabtrag aus dem Zwischenraum in den Schmiertaschen sammelt und diese allmählich zusetzt, wodurch ein ausreichendes Zuführen von Schmierstoff behindert wird.

Eine Aufgabe der vorliegenden Erfindung ist es ein Gleitlagersystem zu verbessern. Das Gleitlagersystem weist zumindest ein Gleitlager auf.

Eine Lösung der Aufgabe gelingt bei einem Gleitlagersystem nach Anspruch 1 und einem Planetengetriebe nach Anspruch 14. Ausgestaltungen ergeben sich nach den Ansprüchen 2 bis 13.

Ein Gleitlagersystem weist ein Radialgleitlager und einen Ringkanal zur Versorgung des Schmierspaltes des Radialgleitlagers mit einem Schmierstoff. Der Schmierstoff ist beispielsweise Öl, Silikon und/oder ein Fett, bzw. weist zumindest eines dieser Substanzen auf. Der Ringkanal befindet sich insbesondere an den Stirnseiten des Radialgleitlagers. Der Schmierspalt weist einen divergenten und einen konvergenten Teil auf. Der divergente Teil bildet dabei den divergenten Schmierspalt aus und der konvergente Teil bildet den konvergenten Schmierspalt aus. Der Ringkanal kann über den Umfang offen oder geschlossen ausgeführt sein. In einer Ausgestaltung des Ringkanals weist dieser eine Spiralform auf.

Die Menge des Schmierstoffs (z.B. Öl), die im Ringkanal vorgehalten wird, reicht aus, um den divergenten Schmierspalt über einen Seitenfluss mit Schmierstoff zu versorgen. Ein austretender Seitenfluss des Radiallagers im konvergenten Spaltbereich wird vom Ringkanal aufgenommen, in Umfangsrichtung über einen entsprechenden Druckausgleich verteilt, gespeichert und kann dann im divergenten Schmierspaltbereich dem Radiallager über den Seitenfluss wieder zugeführt werden. Der Ringkanal dient der internen Verteilung des Schmierstoffs im Radialgleitlager, also in der Festlagereinheit. Das Radialgleitlager versorgt sich so intern selbst.

In einer Ausgestaltung des Gleitlagersystems der divergente Schmierspalt des Radialgleitlagers über den Ringkanal mit dem Schmierstoff versorgt. Über den Ringkanal ist im divergenten Schmierspalt in Umfangsrichtung wieder Schmierstoff zuführbar, um insbesondere einen Unterdruck zu vermeiden, der die Tragfähigkeit des Radialgleitlagers mindern kann.

In einer Ausgestaltung des Gleitlagersystems weist dieses neben einem Radialgleitlager auch ein Axialgleitlager auf, wobei der Schmierspalt des Radialgleitlagers mit dem Schmierspalt des Axialgleitlagers verbunden ist. Dabei ist der Schmierspalt des Radialgleitlagers mit dem Schmierspalt des Axialgleitlagers insbesondere über den Ringkanal verbunden. Das Axialgleitlager befindet sich insbesondere im Bereich einer Stirnseite des Radialgleitlagers. Ein Gleitlagersystem mit Radialgleitlager und Axialgleitlager kann insbesondere bei einem Planetengetriebe eingesetzt werden. Beispielsweise können damit die Planetenräder gelagert sein.

Ein Gleitlagersystem mit einem Radialgleitlager und einem Axialgleitlager kann so ausgebildet sein, dass beide Lager eine separate Schmierstoffzuführung aufweisen, welche nicht miteinander gekoppelt sind. Eine separate Schmierstoffzuführung (insbesondere eine Ölzuführung) für ein oder mehrere Axialgleitlager einer Festlagereinheit ist aufwendig. Dies trifft insbesondere bei der Lagerung eines Planetenrades auf einem drehenden Planetenträger zu, welche nur mit erhöhtem Aufwand möglich ist.

Zur Verbesserung der Lagereigenschaft können im Gleitlagersystem zusätzliche Schmiertaschen mit Schmierstoffzuführung im divergenten Schmierspaltbereich vorgesehen sein. Dabei ist allerdings zu beachten, dass bei Reversierlast die Schmiertasche im Lastbereich liegen kann. Hier kann eine vollständige Tauchschmierung des Gleitlagersystems Abhilfe schaffen.

In einer Ausgestaltung des Gleitlagersystems befindet sich der Ringkanal am Innendurchmesser des Axialgleitlagers und/oder am Radialgleitlagerrand hin zum Axialgleitlager. So kann der Ringkanal zwei Funktionen erfüllen. Zum einen versorgt der Ringkanal den divergenten Schmierspalt des Radialgleitlagers und zum anderen das Axialgleitlager. Das Axialgleitlager kann durch die Ringstruktur des Ringkanals in Umfangsrichtung gleichmäßig mit Schmierstoff versorgt werden.

In einer Ausgestaltung des Gleitlagersystems weist das Radialgleitlager eine erste Schmiertasche auf. Zusätzlich oder alternativ dazu kann auch das Axialgleitlager eine Schmiertasche aufweisen. Das Gleitlagersystem kann also eine weitere Schmiertasche im Axialgleitlager aufweisen. Das Radialgleitlager kann auch eine zweite Schmiertasche oder noch weitere Schmiertaschen aufweisen.

Die Versorgung des Radialgleitlagers mit Schmierstoff erfolgt in einer Ausgestaltung durch einen Schmierstoffzuführkanal, der als Bohrung in dem Lagerkörper des Radialgleitlagers ausgeformt sein kann und diesen durchsetzt. Um eine bessere Verteilung des Schmierstoffes auf der Gleitfläche des Gleitlagers zu bewirken, ist eine Schmiertasche in Form einer Ausnehmung in der Gleitfläche vorgesehen, in welche der Schmierstoffzuführkanal mündet. Dabei erstreckt sich die Schmiertasche z.B. quer zu der Bewegungsrichtung des zum Lagerkörper korrespondierenden Maschinenteils, um einen möglichst breiten Schmierfilm an der Gleitfläche aufzubauen.

In einer Ausgestaltung des Gleitlagersystems ist jeder Schmiertasche des Radialgleitlagers ein Schmierstoffzuführkanal zugeordnet, der den Lagerkörper durchsetzt und dazu ausgebildet ist, der Schmiertasche Schmierstoff zuzuführen.

In einer Ausgestaltung des Gleitlagersystems ist der Schmierspalt des Radialgleitlagers über einen Schmierstoffzuführkanal oder über eine Vielzahl von Schmierstoffzuführkanälen mit Schmierstoff versorgbar, wobei die Schmierstoffkanäle insbesondere symmetrisch über die axiale Länge des Radialgleitlagers verteilt sind. Dies führt zu einer gleichmäßigen Verteilung des Schmierstoffs.

In einer Ausgestaltung des Gleitlagersystems ist der Schmierspalt des Axialgleitlagers über den Schmierspalt des Radialgleitlagers mit Schmierstoff versorgbar. So braucht für das Axialgleitlager kein separater Schmierstoffzuführkanal vorgesehen werden. Weist das Radialgleitlager im Stirnbereich, also im Bereich des axialen Endes des Radialgleitlagers einen Schmierstoffzuführkanal auf, so kann dieser auf der einen Seite das Radialgleitlager versorgen und auf der anderen Seite den Ringkanal befüllen und dort Druck aufbauen, damit über den Ringkanal Schmierstoff in das Axialgleitlager gelangt.

In einer Ausgestaltung des Gleitlagersystems weist das Radialgleitlager einen Radialgleitlagerkörper (Lagerkörper) auf, welcher auf einer Achse eines Planetenrades eines Planetengetriebes sitzt.

In einer Ausgestaltung des Gleitlagersystems weist das Axialgleitlager einen Axialgleitlagerkörper auf, welcher auf einer Wange eines Planetenträgers des Planetengetriebes sitzt.

In einer Ausgestaltung des Gleitlagersystems sitzt ein weiteres Axialgleitlager mit einem weiteren Axialgleitlagerkörper auf einer weiteren Wange des Planetenträgers des Planetengetriebes. Das Gleitlagersystem ist demnach derart ausgestaltbar, dass sich an jeder Stirnseite des Radialgleitlagers ein Axialgleitlager befindet, was einer symmetrischen Kraftverteilung dienen kann.

In einer Ausgestaltung des Gleitlagersystems ist der Schmierspalt des Radialgleitlagers über einen weiteren Ringkanal mit dem weiteren Schmierspalt des weiteren Axialgleitlagers verbunden. Im Bereich der Stirnseiten des Radialgleitlagers ist also jeweils ein Ringkanal zur Aufnahme des Schmierstoffes vorsehbar.

Da die Gleitlagerung nicht mit beliebig vielen Schmiertaschenpositionen ausgestattet werden kann, ist die Versorgung des divergenten Schmierspalts über den Ringkanal bzw. über die Ringkanäle vorteilhaft. Insbesondere ist bei der Verwendung einer Festlagereinheit, mit einem Radialgleitlager und jeweils neben dem Radiallager zwei angeordnete Axialgleitlager, die Versorgungssituation des Radialgleitlagers zusätzlich durch die große Saugwirkung, hervorgerufen durch den Ölbedarf der Axialgleitlager (inkl. Fliehkrafteinfluss), ohne Ringkanal schlecht. Kritisch wird die Situation, wenn der Ölbedarf der Axialgleitlager höher ist, als der Seitenfluss des Radialgleitlagers. Hierbei entsteht dann zwangsläufig eine Unterversorgung des divergenten Schmierspaltbereiches.

In einer Ausgestaltung des Gleitlagersystems weist zumindest ein Ringkanal ein Vielfaches des Schmiermittelvolumens des Schmierspalts des Radialgleitlagers auf, insbesondere weist zumindest der eine Ringkanal zumindest das 30-fache, vorzugsweise mindestens das 50-fache, Schmiermittelvolumen des Schmierspalts des Radialgleitlagers auf. So ergibt sich ein ausreichend großer Ringkanal zwischen Radialgleitlager und Axialgleitlager. Die Schmierstoffmenge bzw. Ölmenge, die im Ringkanal vorgehalten wird, reicht aus, um den divergenten Schmierspalt über einen Seitenfluss mit Schmierstoff zu versorgen. Gleichzeitig wird ausreichend Schmierstoff dem Axiallager zur Verfügung gestellt. Der austretende Seitenfluss des Radialgleitlagers im konvergenten Spaltbereich wird vom Ringkanal aufgenommen, in Umfangsrichtung über einen entsprechenden Druckausgleich verteilt, gespeichert und kann dann im divergenten Schmierspaltbereich dem Radialgleitlager über den Seitenfluss wieder zugeführt werden. Gleichzeitig kann der Ringkanal eine gleichmäßige Versorgung der Axialgleitlager am Inndurchmesser sicherstellen.

Ein Planetengetriebe, insbesondere für eine Windkraftanlage, weist ein Gleitlagersystem der beschriebenen Art auf. So kann eine wartungsarme und kostengünstige Lagerung realisiert werden. Die Anwendung des Gleitlagersystems bei einer Planentenradlagerung für Windgetriebe ist auch deswegen gut, weil das Planetenrad eine große Verlagerungsposition aufgrund der hohen Lasten einnimmt. D.h. die kleinste Schmierfilmdicke ist sehr klein und es ergibt sich eine relative Verlagerung von epsilon > 0,96. (Bei epsilon =1 hat die Welle Kontakt mit der Lagerschale und die minimale Schmierfilmdicke ist gleich Null). Aufgrund dieser großen Verlagerung wird im konvergenten Schmierspalt z.B. ein größeres Ölvolumen seitlich verdrängt, welches rückwirkend im divergenten Schmierspalt wieder zuzuführen ist.

Weitere Merkmale und Vorteile der vorliegenden Erfindung werden anhand der nachfolgenden Beschreibung zweier exemplarischer Ausführungsformen des erfindungsgemäßen Gleitlagersystems unter Bezugnahme auf die beiliegenden beispielhaften Figuren deutlich. Dabei zeigt
- FIG 1: ein Gleitlagersystem mit Ölzufuhr; und
- FIG 2: ein Gleitlagersystem mit einem Radialgleitlager und zwei Axialgleitlagern.

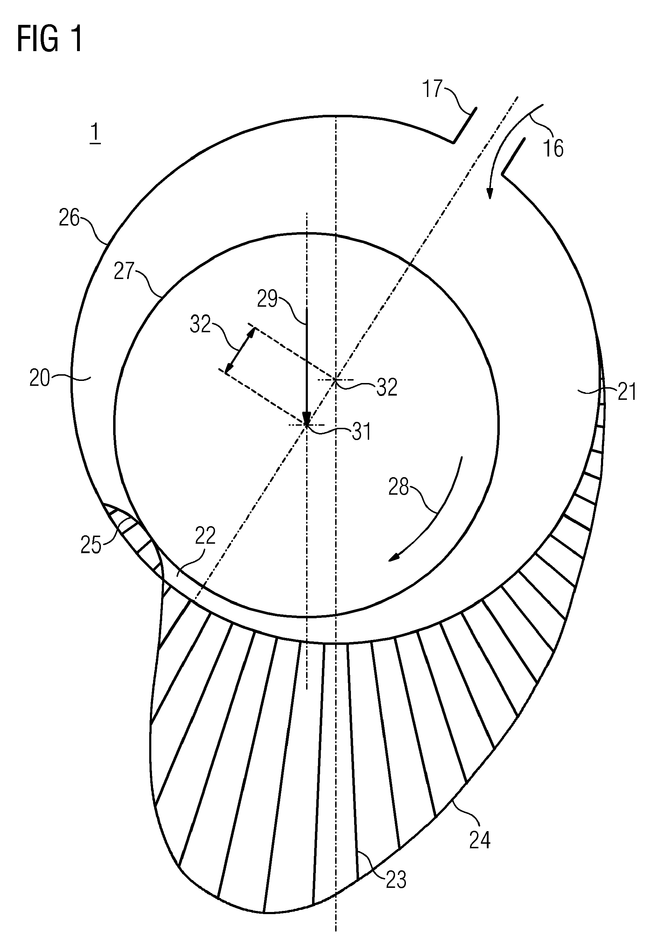

Die Darstellung nach FIG 1 zeigt ein Gleitlagersystem 1 mit Ölzufuhr 16 als Schmierstoffzufuhr für das Gleitlager mit einer Lagerschale 26 und einer Welle 27. Zur Darstellung des Schmierspaltes zwischen der Welle 27 und der Lagerschale 26 ist das Lager schematisiert und mit einem überdimensionierten Lagerspiel dargestellt. Die Lagerschale 26 weist einen Lagerschalenmittelpunkt 30 auf. Die Welle 27 weist einen Wellenmittelpunkt 31 auf. Der Lagerschalenmittelpunkt 30 ist vom Wellenmittelpunkt 31 beabstandet, was durch eine Kraft 29 verursacht sein kann. Der Abstand ist die Exzentrizität 32. Dadurch ergibt sich ein engster Spalt 22 zwischen Welle 27 und Lagerschale 26. Die Lagerschale 26 könnte beispielsweise von einem Planetenrad gebildet werden. Die Welle 27 könnte durch einen Lagerkörper eines Radialgleitlagers auf einer Achse eines Planetenrades gebildet werden. Zwischen der Welle 27 und Lagerschale 26 sind ein divergenter Schmierspalt 20 und ein konvergenter Schmierspalt 21 ausgebildet. Durch den Schmierstoff 16, welcher über einen Schmierstoffzuführkanal 17 zugeführt wird, stellt sich bei einer Drehbewegung ω 28 ein Druckverlauf P 23 ein, welcher in Figur 1 dargestellt ist. Es bilden sich ein Unterdruck 25 und ein hydrodynamischer Tragdruck 24 aus. Der Schmierstoff 17 ist beispielsweise Öl.

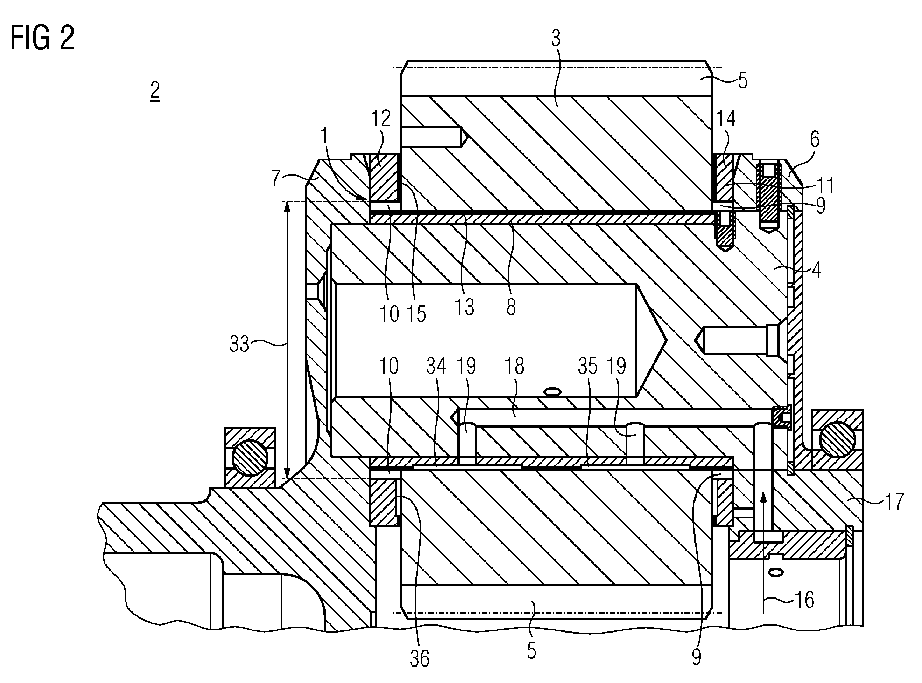

Die Versorgung eines Radialgleitlagers stellt unterschiedliche Anforderungen. Zum einen muss gezielt der Schmierstoff der Schmiertasche (falls vorhanden - siehe FIG 2) im Lager zugeführt werden. Im Bereich des konvergenten Schmierspalts 21 (vor der kleinsten Schmierfilmdicke 22) wird in Gleitrichtung gesehen das inkompressible Öl seitlich verdrängt, dies ist der sogenannte Seitenfluss. Im divergenten Schmierspalt 20 ist in Umfangsrichtung wieder Öl zuzuführen um einen Unterdruck zu vermeiden oder zu reduzieren, der die Tragfähigkeit mindern würde. Da im divergenten Schmierspaltbereich, unmittelbar hinter der kleinesten Schmierfilmdicke 22, wieder Öl zuzuführen ist, entsteht ein zu geringer Ölfüllungsgrad im divergenten Bereich 20, d.h., dass der Schmierspalt nicht vollständig mit Öl, dem Schmierstoff, gefüllt ist.

Die Darstellung nach FIG 2 zeigt ein Gleitlagersystem 1 eines im Ausschnitt und im Querschnitt gezeigten Planetengetriebes 2. Das Gleitlagersystem 1 weist ein Radialgleitlager 8 mit einem Schmierspalt 13 auf. Der Schmierspalt 13 wird durch den Lagerkörper 8 des Radialgleitlagers und die korrespondierende Gleitfläche an einem Planetenrad 3 des Planetengetriebes 2 gebildet. Der Lagerkörper 8 sitzt auf einer Planetenradachse 4 auf. An den Stirnseiten des Radiallagers 8 ist jeweils ein Ringkanal 9 und 10 vorgesehen. Über den Ringkanal 9 wird ein Axialgleitlager 11 mit Schmierstoff versorgt. Über den Ringkanal 10 wird ein Axialgleitlager 12 mit Schmierstoff versorgt. Die Axialgleitlager 10 und 12 befinden sich an den jeweiligen Stirnseiten des Planetenrades 3, welches Planetenradzähne 5 aufweist. Zwischen dem Lagerkörper 12 des nach FIG 2 linksseitigen Axialgleitlagers 12 und dem Planetenrad 3 ist ein Schmierspalt 15 des Axialgleitlagers ausgebildet.

Zwischen dem Lagerkörper 11 des nach FIG 2 rechtsseitigen Axialgleitlagers 11 und dem Planetenrad 3 ist ein Schmierspalt 14 des Axialgleitlagers ausgebildet. Das Planetenrad 3 wird durch einen Planetenträger gehalten. Der Planetenträger weist eine nach FIG 2 rechtsseitige Wange 6 und eine nach FIG 2 linksseitige Wange 7 auf. Die Wangen 6 und 7 tragen die Lagerkörper 11 und 12 der Axialgleitlager. Das Radialgleitlager 8 wird über radiale Schmierstoffzuführungen 19 mit Schmierstoff versorgt. Die Schmierstoffzuführungen 19 münden jeweils mittig in eine erste Schmiertasche 34 des Radialgleitlagers 8 und eine zweite Schmiertasche 35 des Radialgleitlagers 8. Auch die Axialgleitlager 11 und 12 weisen Schmiertaschen 36 auf. Über die Schmiertaschen 34 und 35 des Radialgleitlagers 8 verteilt sich der Schmierstoff im Schmierspalt 13 des Radialgleitlagers 8 und von dort in den jeweiligen stirnseitigen Ringkanal 9 und 10. Die Ringkanäle 9 und 10 befinden sich in einem Bereich des Innendurchmessers des Axialgleitlagers 33. Der Schmierstoff 16 gelangt über einen Schmierstoffzuführkanal 17 in die Planetenradachse 4 und wird dort über eine axiale Schmierstoffzuführung 18 auf die radialen Schmierstoffzuführungen 19 verteilt. Die Ringkanäle 9 und 10 sind ausreichen zu dimensionieren. So ist das Volumen eines der Ringkanäle vorteilhaft zumindest das 50-fache des Schmierstoffvolumens im Schmierspalt 13 des Radialgleitlagers. Das Volumen des jeweiligen Ringkanals kann durch die vorhandenen Bauteile der Gleitlagerung begrenzt sein, so dass sich der Ringkanal ohne zusätzliche Bauteile wie Abdeckbleche realisieren lässt. Durch den bzw. die Ringkanäle lässt sich auch ein Radialgleitlager bei hohem Ölfüllungsgrad im Radialgleitlager ohne zusätzliche Schmiertaschen im divergenten Schmierspaltbereich realisieren. Durch die im Volumen großen Ringkanäle bildet sich eine gleichmäßige Versorgung der Axialgleitlager und Schmierstoffspeicher aus, wobei sich auch ein Druckausgleich ergibt. Bei einem Ausfall der Ölversorgung, für Öl als Schmierstoff, steht hierdurch noch eine gewisse Ölmenge zur Notversorgung zur Verfügung, bis z.B. ein angeschlossener Antriebsstrang heruntergefahren ist und zum Stillstand gekommen ist. Der Ringkanal 9, 10 ermöglicht eine hohe Betriebssicherheit für unterschiedliche Designvarianten.

Aufgrund der hohen Lasten in Windgetrieben ist die Positionierung einer zusätzlichen Schmiertasche im divergenten Spaltbereich nicht möglich, ohne eine hydrostatische Druckerhöhung vorzunehmen. Damit diese Druckerhöhung bei einem Verzicht auf eine zusätzliche Schmiertasche im divergenten Spaltbereich nicht notwendig ist, werden die großvolumigen Ringkanäle 9 und 10 als Verbindung zwischen dem Schmierspalt 13 des Radialgleitlagers und dem Schmierspalt 14, 15 des Axialgleitlagers verwendet.

## Patentansprüche

1. Gleitlagersystem (1) mit einem Radialgleitlager (8) und mit einem Ringkanal (9,10) zur Versorgung des Schmierspaltes (13) des Radialgleitlagers mit einem Schmierstoff (16).

2. Gleitlagersystem (1) nach Anspruch 1, wobei der divergente Schmierspalt (20) des Radialgleitlagers (8) über den Ringkanal (9,10) mit dem Schmierstoff (16) versorgbar ist.

3. Gleitlagersystem (1) nach Anspruch 1 oder 2, mit einem Axialgleitlager (11,12), wobei der Schmierspalt (13) des Radialgleitlagers mit dem Schmierspalt (14,15) des Axialgleitlagers verbunden ist, wobei der Schmierspalt (13) des Radialgleitlagers mit dem Schmierspalt (14,15) des Axialgleitlagers insbesondere über den Ringkanal (9,10) verbunden ist.

4. Gleitlagersystem (1) nach einem der Ansprüche 1 bis 3, wobei sich der Ringkanal (9,10) am Innendurchmesser (33) des Axialgleitlagers befindet.

5. Gleitlagersystem (1) nach einem der Ansprüche 1 bis 4, wobei das Radialgleitlager (8) eine erste Schmiertasche (34) aufweist und/oder das Axialgleitlager (11,12) auch eine Schmiertasche (36) aufweist.

6. Gleitlagersystem (1) nach einem der Ansprüche 1 bis 5, wobei der Schmierspalt (13) des Radialgleitlagers über einen Schmierstoffzuführkanal (17) mit Schmierstoff (16) versorgbar ist.

7. Gleitlagersystem (1) nach einem der Ansprüche 3 bis 6, wobei der Schmierspalt (14,15) des Axialgleitlagers über den Schmierspalt (13) des Radialgleitlagers mit Schmierstoff (16) versorgbar ist.

8. Gleitlagersystem (1) nach einem der Ansprüche 1 bis 7, wobei das Radialgleitlager (8) einen Radialgleitlagerkörper aufweist, welcher auf einer Achse (4) eines Planetenrades (3) sitzt.

9. Gleitlagersystem (1) nach einem der Ansprüche 3 bis 8, wobei das Axialgleitlager (11,12) einen Axialgleitlagerkörper aufweist, welcher auf einer Wange (6,7) eines Planetenträgers sitzt.

10. Gleitlagersystem (1) nach einem der Ansprüche 3 bis 9, wobei ein weiteres Axialgleitlager (12) mit einem weiteren Axialgleitlagerkörper auf einer weiteren Wange (7) des Planetenträgers sitzt.

11. Gleitlagersystem (1) nach einem der Ansprüche 3 bis 10, wobei der Schmierspalt (13) des Radialgleitlagers über einen weiteren Ringkanal (10) mit dem weiteren Schmierspalt (15) des weiteren Axialgleitlagers verbunden ist.

12. Gleitlagersystem (1) nach einem der Ansprüche 1 oder 9, wobei zumindest ein Ringkanal (9,10) ein Vielfaches des Schmiermittelvolumens des Schmierspalts (13) des Radialgleitlagers aufweist.

13. Gleitlagersystem (1) nach Anspruch 12, wobei zumindest der eine Ringkanal (9,10) zumindest das 30-fache Schmiermittelvolumen des Schmierspalts (13) des Radialgleitlagers aufweist.

14. Planetengetriebe (2) mit einem Gleitlagersystem (1) nach einem der Ansprüche 1 bis 13.
